(19) Europäisches Patentamt
European Patent Office
Office européen des brevets

(11) **EP 1 334 017 B1**

(12) **EUROPÄISCHE PATENTSCHRIFT**

(45) Veröffentlichungstag und Bekanntmachung des Hinweises auf die Patenterteilung:
**27.04.2011   Patentblatt 2011/17**

(21) Anmeldenummer: **01992663.3**

(22) Anmeldetag: **30.10.2001**

(51) Int Cl.:
**B60T 8/1755** (2006.01)

(86) Internationale Anmeldenummer:
**PCT/EP2001/012524**

(87) Internationale Veröffentlichungsnummer:
**WO 2002/036401 (10.05.2002 Gazette 2002/19)**

(54) **VERFAHREN ZUR REGELUNG DER FAHRSTABILITÄT**

METHOD FOR REGULATING THE DRIVING STABILITY OF A VEHICLE

PROCEDE POUR REGULER LA STABILITE DE CONDUITE D'UN VEHICULE

(84) Benannte Vertragsstaaten:
**DE FR GB IT**

(30) Priorität: **03.11.2000   DE 10054647**

(43) Veröffentlichungstag der Anmeldung:
**13.08.2003   Patentblatt 2003/33**

(73) Patentinhaber: **Continental Teves AG & Co. oHG**
**60488 Frankfurt am Main (DE)**

(72) Erfinder:
• **WANKE, Peter**
**60437 Frankfurt/Main (DE)**

• **KÜMMEL, Martin**
**34286 Spangenberg (DE)**
• **RAULFS, Henning**
**61352 Bad Homburg (DE)**
• **MAY, Alexander**
**75365 Calw (DE)**

(56) Entgegenhaltungen:
| | |
|---|---|
| WO-A-99/67115 | DE-A- 4 109 925 |
| DE-A- 4 419 650 | DE-A- 19 503 148 |
| DE-A- 19 733 676 | DE-A- 19 813 736 |
| DE-A1- 19 615 294 | |

**Beschreibung**

Die Erfindung betrifft ein Verfahren zur Regelung der Fahrstabilität nach dem Oberbegriff des Anspruchs 1 oder 9.

Heftige Lenk- und Gegenlenkaktionen bei z.B. Ausweichmanövern, Spurwechseln, Freestyle u. dgl. können bei hohem Reibwert zu Fahrzeuginstabilitäten führen. Bei Fahrzeugen mit hohem Schwerpunkt besteht dabei vermehrt die Gefahr des Umkippens.

Um diesen Fahrzeuginstabilitäten selbsttätig entgegenzuwirken sind eine Vielzahl von Fahrstabilitätsregelungen bekannt geworden. Unter dem Begriff Fahrstabilitätsregelung vereinigen sich fünf Prinzipien zur Beeinflussung des Fahrverhaltens eines Fahrzeugs mittels vorgebbarer Drücke bzw. Bremskräfte in oder an einzelnen Radbremsen und mittels Eingriff in das Motormanagement des Antriebsmotors. Dabei handelt es sich um Bremsschlupfregelung (ABS), welche während eines Bremsvorgangs das Blockieren einzelner Räder verhindern soll, um Antriebsschlupfregelung (ASR), welche das Durchdrehen der angetriebenen Räder verhindert, um elektronische Bremskraftverteilung (EBV), welche das Verhältnis der Bremskräfte zwischen Vorder- und Hinterachse des Fahrzeugs regelt, um eine Kippregelung (ARB) die ein Kippen des Fahrzeugs um seine Längsachse verhindert, sowie um eine Giermomentregelung (ESP), welche für stabile Fahrzustände beim Gieren des Fahrzeugs um die Hochachse sorgt.

Mit Fahrzeug ist also in diesem Zusammenhang ein Kraftfahrzeug mit vier Rädern gemeint, welches mit einer hydraulischen, elektro-hydraulischen oder elektro-mechanischen Bremsanlage ausgerüstet ist. In der hydraulischen Bremsanlage kann mittels eines pedalbetätigten Hauptzylinders vom Fahrer ein Bremsdruck aufgebaut werden, während die elektro-hydraulischen und elektro-mechanischen Bremsanlagen eine vom sensierten Fahrerbremswunsch abhängige Bremskraft aufbauen. Im Folgenden wird auf eine hydraulische Bremsanlage bezug genommen. Jedes Rad besitzt eine Bremse, welcher jeweils ein Einlaßventil und ein Auslaßventil zugeordnet sind. Über die Einlaßventile stehen die Radbremsen mit dem Hauptzylinder in Verbindung, während die Auslaßventile zu einem drucklosen Behälter bzw. Niederdruckspeicher führen. Schließlich ist noch eine Hilfsdruckquelle vorhanden, welche auch unabhängig von der Stellung des Bremspedals einen Druck in den Radbremsen aufzubauen vermag. Die Einlaß- und Auslaßventile sind zur Druckregelung in den Radbremsen elektromagnetisch betätigbar.

Zur Erfassung von fahrdynamischen Zuständen sind vier Drehzahlsensoren, pro Rad einer, ein Giergeschwindigkeitsmesser, ein Querbeschleunigungsmesser und mindest ein Drucksensor für den vom Bremspedal erzeugten Bremsdruck vorhanden. Dabei kann der Drucksensor auch ersetzt sein durch einen Pedalweg- oder Pedalkraftmesser, falls die Hilfsdruckquelle derart angeordnet ist, daß ein vom Fahrer aufgebauter Bremsdruck von dem der Hilfsdruckquelle nicht unterscheidbar ist.

Bei einer Fahrstabilitätsregelung wird das Fahrverhalten eines Fahrzeugs derart beeinflußt, daß es für den Fahrer in kritischen Situationen besser beherrschbar wird. Eine kritische Situation ist hierbei ein instabiler Fahrzustand, in welchem im Extremfall das Fahrzeug den Vorgaben des Fahrers nicht folgt. Die Funktion der Fahrstabilitätsregelung besteht also darin, innerhalb der physikalischen Grenzen in derartigen Situationen dem Fahrzeug das vom Fahrer gewünschte Fahrzeugverhalten zu verleihen.

Während für die Bremsschlupfregelung, die Antriebsschlupfregelung und die elektronische Bremskraftverteilung in erster Linie der Längsschlupf der Reifen auf der Fahrbahn von Bedeutung ist, fließen in die Giermomentregelung (GMR) weitere Größen ein, beispielsweise die Gierwinkelgeschwindigkeit und die Schwimmwinkelgeschwindigkeit. Kippregelungen werten in der Regel Querbeschleunigungs- oder Wankgrößen aus (DE 196 32 943 A1).

Wünschenswert wäre es, instabile Fahrsituationen, die vom Fahrer oftmals nicht beherrscht werden, von vornherein zu vermeiden, so daß kritischen Fahrsituationen erst gar nicht entstehen können.

Aus der DE 42 01 146 A1 ist ein System für die Vorhersage des Verhaltens eines Kraftfahrzeugs und für eine hierauf basierende Steuerung bekannt, das über eine Vielzahl von Beschleunigungssensoren verfügt, deren Daten mittels komplexer Berechnungen ausgewertet werden.

Der Erfindung liegt die Aufgabe zugrunde, ein Verfahren zur Regelung der Fahrstabilität zu schaffen, welches eine möglichst schnelle Reaktion auf vorhergesagte instabile Fahrsituationen mittels eines kritische Fahrsituationen abschwächenden oder vermeidenden Eingriffs erlaubt.

Erfindungsgemäß wird diese Aufgabe dadurch gelöst, daß ein gattungsgemäßes Verfahren so durchgeführt wird, daß bei einem stabilen Fahrverhalten ermittelt wird, ob anhand eines hochdynamischen Anlenkens eine Tendenz zu einem nachfolgenden instabilen Fahrverhalten vorliegt, und daß in diesem Fall ein Bremsen - Voreingriff bereits bei einem stabilen Fahrverhalten erfolgt.

Hierdurch wird eine kritische Fahrsituation bereits beim Entstehen entweder vermieden oder auf ein Maß reduziert, daß sie vom Fahrer beherrscht werden kann. Anhand der bei einem ESP-Regelungssystem vorhandenen Bremsanlage und Sensorik, mit den Ausstattungselementen

vier Raddrehzahlsensoren

Drucksensor (P)

Querbeschleunigungssensor (LA)

Gierratensensor (YR)

Lenkradwinkelsensor (SWA)

individuell ansteuerbare Radbremsen

Hydraulikeinheit (HCU)

Elektronik-Steuereinheit (ECU)

läßt sich eine Vorhersage einer kritischen Fahrsituation und vorzugsweise deren Vermeidung ohne zusätzliche Sensoren realisieren. Dabei wird die kritische Fahrsituation anhand eines hochdynamischen Anlenkens, bei dem der Lenkradwinkel als einzige Messgröße erfasst werden muß, vorhergesagt. Eine Ermittlung der Lenkradwinkelgeschwindigkeit erfordert dann nur geringe Zeit. Daher empfiehlt es sich, genau diese gemessene oder berechnete Lenkradwinkelgeschwindigkeit zur Vorhersage eines instabilen Fahrverhaltens heranzuziehen, um frühzeitig, und zwar bevor andere Messgrößen eine Vorhersage erlauben, korrigierende Schritte vornehmen zu können.

Zur frühzeitigen Vorhersage von instabilen Fahrzuständen wird das hochdynamische Anlenken in Abhängigkeit von dem zeitlichen Verlauf der Lenradwkinkelgeschwindigkeit erkannt.

Es ist zweckmäßig, daß der Verlauf zwischen dem Verlassen eines Ruhebandes, das ein stationäres, stabiles Fahrverhalten wiedergibt, und dem Eintritt der Lenkradwinkelgeschwindigkeit in das Ruheband bewertet wird.

Vorteilhaft wird das hochdynamische Anlenken erkannt, wenn die folgenden Bedingungen erfüllt sind:

a.)

$$|SWAP_{MAX}|/(T_2 - T_1) \quad > Schwellenwert1$$

b.)

$$|SWAP_{MAX}|/(T_3 - T_2) \quad > Schwellenwert2$$

c.)

$$|SWAP_{MAX}| \qquad > Schwellenwert3$$

mit SWAP = Lenkradwinkelgeschwindigkeit, $SWAP_{MAX}$ = Maximum der Lenkradwinkelgeschwindigkeit, $T_1$ = Zeitpunkt des Austritts der Lenkradwinkelgeschwindigkeit aus dem Ruheband, $T_2$ = Zeitpunkt des Maximums der Lenkradwinkelgeschwindigkeit, $T_3$ = Zeitpunkt des Eintritts der Lenkradwinkelgeschwindigkeit in das Ruheband.

Dabei wird in a.) die durchschnittliche Lenkradwinkelbeschleunigung bis zum Erreichen der maximalen Lenkradwinkelgeschwindigkeit und in b.) die durchschnittliche Lenkradwinkelverzögerung bis zum Eintritt in das Ruheband gemessen. Liegen diese Meßwerte über den Schwellenwerten S1 bzw. S2, kann ein Anlenken als hochdynamisch eingeschätzt werden. Mit der Bedingung c.) wird das Maximum der Lenkradwinkelgeschwindigkeit selbst bewertet. Liegt diese oberhalb des gegebenen Schwellenwerts S3, kann davon ausgegangen werden, daß die Lenkamplitude groß genug ist, um ein instabiles Fahrverhalten (Fahrzustand) zu erzeugen.

Zur Vermeidung eines instabilen Fahrverhaltens erfolgt ein Bremsen - Voreingriff vorteilhaft bei stabilem Fahrverhalten, wenn zum Zeitpunkt $T_3$ des Eintritts der Lenkradwinkelgeschwindigkeit in das Ruheband die Beträge der Gierrate und/oder der Querbeschleunigung oberhalb vorgegebener Schwellenwerte S7 bzw. S8 liegen. Die Gierrate und die Querbeschleunigung werden also zum Aktivieren eines das Fahrzeugverhalten korrigierenden Schrittes, eines Bremsen - Voreingriffs, herangezogen. Die Gierrate und die Querbeschleunigung unterstützen dabei das Lenkradwinkelgeschwindigkeits-Signal, mit der Information, ob Hochreibwert vorliegt. Liegen die Beträge der Gierrate und Querbeschleunigung oberhalb der Schwellenwerte S7 und S8, erfolgt der Bremsen - Voreingriff am kurvenäußeren Vorderrad.

Vorteilhaft sind die Schwellenwerte S1 bis S9 und das mit dem Bremsen - Voreingriff aufgebrachte Bremsmoment von der Fahrzeuggeschwindigkeit $v_{Ref}$ und/oder dem Maximum der Lenkradwinkelgeschwindigkeit abhängig. Das aufgebrachte Bremsmoment ist dabei um so größer, je größer die Fahrzeuggeschwindigkeit und/oder je größer das Maximum der Lenkradwinkelgeschwindigkeit ist. Die Schwellenwerte S1 bis S9 werden mit zunehmender Fahrzeuggeschwindigkeit kleiner und mit Ausnahme von S3 mit zunehmendem Maximum der Lenkradwinkelgeschwindigkeit größer.

Es ist zweckmäßig, daß der Bremsen - Voreingriff solange erfolgt, wie die Bedingung $|SWAP_t\text{-}SWAP_{MAX}|/(t\text{-}T_2)>Schwellenwert4$ erfüllt ist d.h. solange nach einem erkannten hochdynamischen Anlenken eine ebenfalls hochdynamische Rücklenkbewegung vorliegt. Damit wird verhindert, daß nach einem hochdynamischen Anlenken, das in eine stationäre Kurvenfahrt mündet, ein unplausibel langer Bremsen - Voreingriff durchgeführt wird.

Bei extremem Gegenlenken während einer Kurvenfahrt mit hoher Querbeschleunigung werden durch die hohe Querdynamik der Karosserie Wankbewegungen (aus- und einfedern) erzeugt. Das Fahrzeug wird destabilisiert, mit der Gefahr des Kippens um die Längsachse. Gegenstand der Erfindung ist daher ferner, ein gattungsgemäßes Verfahren so weiterzubilden, daß bei einer stabilen Kurvenfahrt ermittelt wird, ob anhand der Lenkradwinkelgeschwindigkeit und der Querbeschleunigung eine Tendenz zu einem nachfolgenden instabilen Fahrverhalten vorliegt, und daß in diesem Fall ein Bremsen - Voreingriff bereits bei einem stabilen Fahrverhalten erfolgt.

Es ist zweckmäßig, daß der Bremsen - Voreingriff beim Wechsel der Lenkrichtung (Nulldurchgang des Lenkradwinkels = $SWA(T_4)$ aktiviert wird, wenn die folgenden Bedingungen erfüllt sind: SWAP < Schwellenwert 5 und LA > Schwellenwert 6

oder

SWAP > Schwellenwert 5 und

LA < Schwellenwert 6

mit SWAP = Lenkradwinkelgeschwindigkeit, LA =

Querbeschleunigung. Dabei kann der Richtungssinn (Definition des Vorzeichens), ob es sich um eine Rechts- oder Linkskurve handelt, frei gewählt werden. So kann beispielsweise die Bedingung SWAP < Schwellenwert 5 einem Wechsel von einer Linkskurve nach einer Rechtskurve entsprechen.

Der Bremsen - Voreingriff wird beendet, wenn wenigstens eine der folgenden Bedingungen erfüllt ist:

a.)

$$|C1*SWAP + SWA| < Schwellenwert9$$

und/oder

b.) nach einem Gierratenmaximum wird ein Richtungswechsel (Nulldurchgang) der Gierrate festgestellt und/oder

c.) eine maximale Eingriffszeitdauer ist überschritten.

In der Bedingung a.) wird zunächst ein PD-Kriterium zur kombinierten Bewertung des Lenkradwinkelausschlags (proportionaler Anteil P) und der Lenkradwinkelgeschwindigkeit (differenzierender Anteil D) gebildet und dies mit dem Schwellenwert S9 verglichen. Liegt das Kriterium oberhalb des Schwellenwertes, ist die Bedingung also nicht erfüllt, liegt die hochdynamische Gegenlenkbewegung zum betrachteten Zeitpunkt weiterhin vor. Der Bremsen - Voreingriff kann daher fortgesetzt werden.

Mit der Bedingung b.) wird geprüft, ob der Bremsen - Voreingriff eventuell zu heftig war. Das ist dann der Fall, wenn das Fahrzeug der vom Fahrer vorgegebenen Lenkbewegung überhaupt nicht mehr folgt, d.h. die Gierrate einen Richtungswechsel (Nulldurchgang) vollzieht. Eine Fortsetzung des Bremsen - Voreingriffs ist unter diesen Umständen nicht sinnvoll.

Bedingung c.) sorgt für eine zeitliche Begrenzung des Bremsen - Voreingriffs. Es ist zweckmäßig, die maximale Eingriffszeitdauer in Abhängigkeit von der Fahrzeuggeschwindigkeit und/oder von der gemessenen Querbeschleunigung zum Beginn des Bremsen - Voreingriffs zu gestalten. Die maximale Eingriffszeitdauer ist um so größer, je größer die Fahrzeuggeschwindigkeit bzw. die Querbeschleunigung zum Eingriffsbeginn ist.

Der Bremseingriff erfolgt vorzugsweise an beiden Vorderrädern. Zum einen kann dadurch ein größeres Gesamtbremsmoment abgesetzt und damit das Fahrzeug stärker verzögert werden. Zum anderen müßte der Eingriff am kurvenäußeren Vorderrad so heftig ausfallen, daß das dadurch erzeugte Giermoment zu groß werden würde. Mit dem Bremseingriff am kurveninneren Vorderrad kann diesem zu großen Giermoment entgegengewirkt werden.

Bei den beschriebenen Gegenlenkbewegungen folgt der Nulldurchgang der Gierrate ($T_5$) kurze Zeit nach dem Nulldurchgang des Lenradkwinkels ($T_4$), dem Beginn des Eingriffs an beiden Vorderrädern. Beim Nulldurchgang der Gierrate erfolgt ein Seitenwechsel des kurvenäußeren Vorderrades, das durch den vorhergehenden Druckaufbau an beiden Vorderrädern bereits vorgefüllt wurde, was die Druckdynamik erheblich erhöht und die Verzugszeit zwischen Eingriffsbeginn und dem Erreichen des maximalen Bremsmoments drastisch reduziert.

Um eine dem vorhergesagten instabilen Fahrverhalten angepaßte Korrekturmaßnahme während des stabilen Fahrverhaltens zu aktivieren, erfolgt das mit dem Bremsen - Voreingriff aufgebrachte Bremsmoment in Abhängigkeit von der Fahrzeuggeschwindigkeit $v_{Ref}$ und/oder der Querbeschleunigung und/oder dem Lenkradwinkelgradienten. Dabei erfolgt die Zeitdauer des Bremsen - Voreingriffs vorteilhaft in Abhängigkeit von der Fahrzeuggeschwindigkeit $v_{Ref}$ und/ oder der Querbeschleunigung und/oder dem Lenkradwinkelgradienten.

Ein Ausführungsbeispiel der Erfindung ist in der Zeichnung dargestellt und wird im Folgenden näher beschrieben.

Es zeigen

Figur 1    ein Beispiel eines doppelten Spurwechsels

Figur 2    erfindungsgemäß ausgewertete bzw. erzeugte Signalfolgen

Figur 3    ein Fahrzeug mit den Komponenten einer Fahrdynamik- regelung

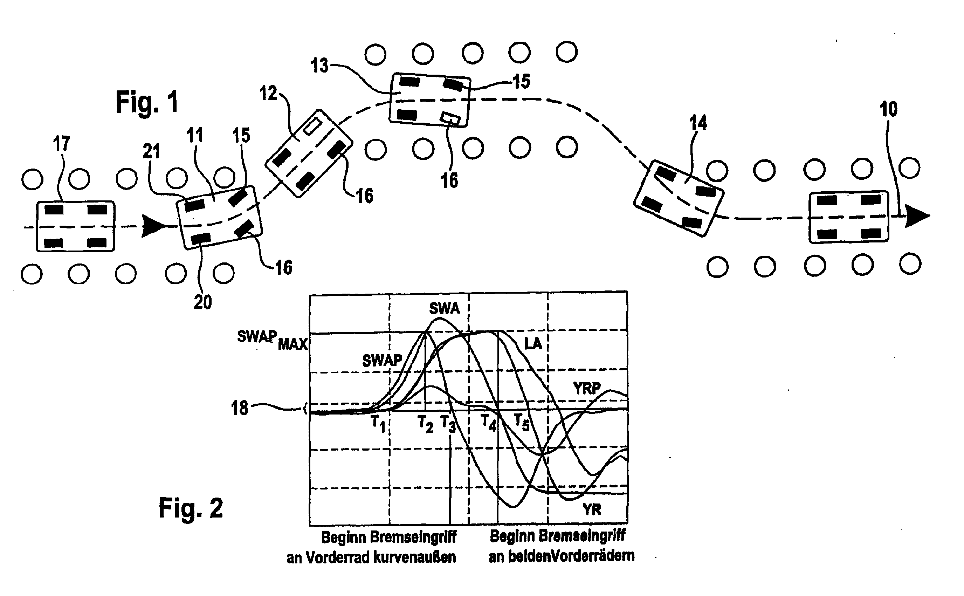

Figur 1 zeigt einen doppelten Spurwechsel, der beispielsweise gewünscht sein kann, wenn plötzlich einem Hindernis auszuweichen ist. 10 ist der gewünschte Kurs; das Fahrzeug bewegt sich längs der Positionen 11, 12, 13 und 14. Hier werden verschiedene Situationen nacheinander durchlaufen. Um den gewünschten Kurs insbesondere bei höheren Geschwindigkeiten zu durchfahren, ist zunächst ein hochdynamisches Anlenken mit vergleichsweise großem bzw. heftigem Lenkeinschlag der Vorderräder 15, 16 erforderlich (Position 11). Anschließend erfolgt eine Rücklenkbewegung mit Lenkradwinkelnulldurchgang (Position 12) und nachfolgender Gegenlenkaktion zum Ende des ersten Spurwechsels (Position 13) und weiter zum zweiten Spurwechsel (Position 14). Wird ein solches Manöver auf hohem Reibwert ungebremst durchfahren, wird das Fahrzeug typischerweise zwischen Position 13 und Position 14 ab einer bestimmten Kombination aus Fahrzeuggeschwindigkeit, Lenkdynamik und Lenkamplitude zwangsweise instabil, d.h. es baut größere Schwimmwinkel auf (> 2 Grad), die für den Fahrer nicht mehr beherrschbar sind. Insbesondere Fahrzeuge mit hohem Fahrzeugschwerpunkt können durch die auftretende Querdynamik zu Nick- und Wankbewegungen angeregt werden, die im ungünstigsten Fall zum Kippen des Fahrzeugs um die Längsachse führen können. Ein ESP-Regler kann das instabile Fahrverhalten erkennen und korrigierend eingreifen, es kann jedoch das Entstehen des instabilen Zustands nicht verhindern. Um diese Gefahrensituation zu vermeiden, ist es notwendig, die Fahrzeuggeschwindigkeit wie auch die Lenkdynamik erfindungsgemäß durch einen frühzeitigen heftigen Bremseingriff zu reduzieren.

Figur 2 zeigt den Signalverlauf beim ersten Spurwechsel (Positionen 11 bis 13). Befindet sich das Fahrzeug in der Position 17, weist es ein stabiles Fahrverhalten auf, d.h. das Fahrzeug folgt der Fahrervorgabe ohne merkliche Differenz, der Schwimmwinkel liegt bei 0 Grad. Die von dem Regelungssystem der Bremsanlage zur Verfügung gestellten Signale SWAP (Lenkradwinkelgeschwindigkeit), SWA (Lenradkwinkel), LA (Querbeschleunigung), YR (Gierrate) und (Gierwinkelgeschwindigkeit) befinden sich bei diesem stabilen Fahrzustand in einem Ruheband 18, das z.B. durch eine Lenkradwinkelgeschwindigkeit kleiner 40 bis 200 Grad/s gekennzeichnet ist. Wie Figur 2 zeigt, kann die bezugnehmend auf Figur 1 geschilderte Situation ( hochdynamisches Anlenken ) auftreten. Das hochdynamische Anlenken wird aus dem Verlauf der Lenkradwinkelgeschwindigkeit SWAP zwischen dem Verlassen (Zeitpunkt $T_1$) und dem Eitritt (Zeitpunkt $T_3$) in das Ruheband 18 ermittelt. Ein eindeutiger Impuls des Lenkradwinkelgradienten SWAP charakterisiert dabei ein hochdynamisches Anlenken, das anhand der folgenden Bedingungen festgestellt wird:

a.)

$$|SWAP_{MAX}| / (T_2 - T_1) \; > Schwellenwert1$$

b.)

$$|SWAP_{MAX}| / (T_3 - T_2) \; > Schwellenwert2$$

c.)

$$|SWAP_{MAX}| \qquad\qquad > Schwellenwert3$$

mit SWAP = Lenkradwinkelgeschwindigkeit, $SWAP_{MAX}$ = Maximum der Lenkradwinkelgeschwindigkeit, $T_1$ = Zeitpunkt des Austritts der Lenkradwinkelgeschwindigkeit aus dem Ruheband 18, $T_2$ = Zeitpunkt des Maximums der

Lenkradwinkelgeschwindigkeit, $T_3$ = Zeitpunkt des Eintritts der Lenkradwinkelgeschwindigkeit in das Ruheband 18. Es wird also die durchschnittliche Lenkradwinkelbeschleunigung bis zum Erreichen der maximalen Lenkradwinkelgeschwindigkeit und die durchschnittliche Lenkradwinkelverzögerung bis zum Eintritt in das Ruheband ermittelt. Liegt die Lenkradwinkelbeschleunigung oberhalb eines Wertes im Bereich von 600 bis 2000 Grad/s$^2$ (Schwellenwert S1), die Lenkradwinkelverzögerung oberhalb eines Wertes im Bereich von 800 und 2500 Grad/s$^2$ (Schwellenwert S2) und der Absolutwert des Maximums SWAP$_{MAX}$ oberhalb eines Wertes im Bereich von 250 bis 600 Grad/s$^2$ (Schwellenwert S3), kann ein Anlenken als hochdynamisch eingeschätzt werden. Die Lenkamplitude ist oberhalb S3 so groß, daß eine Tendenz zu einem nachfolgenden instabilen Fahrverhalten (Fahrzustand) vorausgesagt werden kann.

Sind die Bedingungen a.), b.) und c.) erfüllt und liegt zum Zeitpunkt $T_3$ des Eintritts der Lankradwinkelgeschwindigkeit der Absolutwerte der Gierrate YR oberhalb eines Wertes im Bereich von z.B. 20 bis 40 Grad/s (Schwellenwert 7) und die Querbeschleunigung LA oberhalb eines Wertes im Bereich von z.B. 4,5 bis 8 m/s$^2$ (Schwellenwert 8) wird der Bremseingriff am kurvenäußeren Vorderrad 16 gestartet.

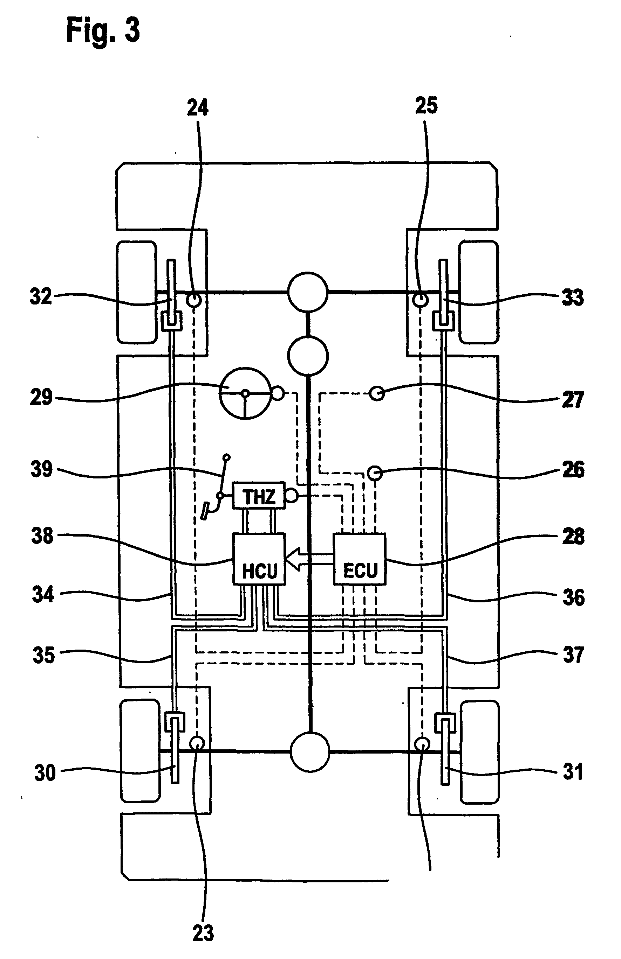

Figur 3 zeigt schematisch ein Fahrzeug mit einem Bremsregelungssystem. In Figur 3 sind vier Räder 15, 16, 20, 21 gezeigt. An jedem der Räder 15, 16, 20, 21 ist je ein Radsensor 22 bis 25 vorgesehen. Die Signale werden einer elektronischen Komponente 28 zugeführt, die anhand vorgegebener Kriterien aus den Raddrehzahlen die Fahrzeuggeschwindigkeit $v_{Ref}$ ermittelt. Weiterhin sind ein Gierratensensor 26, ein Querbeschleunigungssensor 27 und ein Lenkradwinkelsensor 29 mit der Komponente 28 verbunden. Jedes Rad weist außerdem eine Radbremse 30 bis 33 auf. Diese Bremsen werden hydraulisch betrieben und empfangen unter Druck stehendes Hydraulikfluid über Hydraulikleitungen 34 bis 37. Der Bremsdruck wird über einen Ventilblock 38 eingestellt, wobei der Ventilblock von elektrischen Signalen fahrerunabhängig angesteuert wird, die in der elektronischen Regelung 28 erzeugt werden. Über ein von einem Bremspedal betätigten Hauptzylinder kann von dem Fahrer Bremsdruck in die Hydraulikleitungen eingesteuert werden. In dem Hauptzylinder bzw. den Hydraulikleitungen sind Drucksensoren vorgesehen, mittels denen der Fahrerbremswunsch erfaßt werden kann.

Durch die Regelung 28 wird in dem Rad 16 der Bremsdruck individuell eingestellt. Beobachtet wird die Fahrzeuggeschwindigkeit $v_{Ref}$ und die maximale Lenkradwinkelgeschwindigkeit SWAP$_{MAX}$ anhand der vom Lenkradwinkelsensor 29 und von den Radsensoren 22-25 abgegebenen Signalen. Nach Maßgabe der empfangenen Signale werden Ansteuersignale für die Ventile im Ventilblock 38 erzeugt. Dadurch wird ein Bremsmoment erzeugt, das geschwindigkeits- und SWAP$_{MAX}$ - abhängig ist. Je größer die Fahrzeuggeschwindigkeit und/oder SWAP$_{MAX}$ ist, um so größer ist das Bremsmoment. Durch das eingesteuerte Bremsmoment wird die Längskraft am kurvenäußeren Vorderrad erhöht, die Seitenkraft jedoch nicht reduziert. Das Vorderrad 16 wird also mit geringen Schlupfwerten betrieben. Dadurch wird das Fahrzeug verzögert, ohne die Lenkfähigkeit zu stark einzuschränken. Parallel zu dem eingesteuerten Bremsmoment werden auch alle Schwellenwerte in Abhängigkeit von der Fahrzeuggeschwindigkeit $v_{Ref}$ und der maximalen Lenkradwinkelgeschwindigkeit SWAP$_{MAX}$ berechnet. Die Schwellenwerte S1-S9 werden bei zunehmender $v_{Ref}$ kleiner und bei zunehmendem Maximum SWAP größer (Ausnahme S3). Der Bremsen - Voreingriff bleibt solange aktiv, solange nach einem hochdynamischen Anlenken eine ebenfalls hochdynamische Rücklenkbewegung vorliegt. Wenn die Bedingung $|SWAP_t\text{-}SWAP_{MAX}|/(t\text{-}T_2)>Schwellenwert4$ (z.B. ein Wert im Bereich von 800 bis 3000Grad/s$^2$ ) erfüllt ist, wird auf eine solche Rücklenkbewegung geschlossen und der Bremsen - Voreingriff wird fortgesetzt. Er wird beendet, sobald obige Bedingung nicht mehr erfüllt ist.

Bei extremem Gegenlenken während einer Kurvenfahrt mit hoher Querbeschleunigung wird der Bremsen - Voreingriff beim Wechsel der Lenkrichtung, also zum Zeitpunkt $T_4$ des Nulldurchganges des Lenkradwinkels, von der Regelung 28 aktiviert. Dabei wird nach Maßgabe der Bedingung

SWAP < 400 bis 1000 Grad/s$^2$ (Schwellenwert 5) und

LA > 5 bis 10 m/s$^2$ (Schwellenwert 6)

oder

SWAP > Schwellenwert 5 und

LA < Schwellenwert 6

durch die Regelung 28 Bremsdruck vorzugsweise in den Vorderrädern 15, 16 individuell eingestellt. Die beiden Bedingungen erfassen dabei den Übergang von einer Links- zu einer Rechtskurve oder von einer Rechts- zu einer Linkskurve, der vom Vorzeichen abhängig ist. Durch den Bremsen - Voreingriff an den beiden Vorderrädern 15, 16 kann eine Verringerung der Fahrzeuggeschwindigkeit $v_{Ref}$ bei gleichzeitiger Verringerung der Seitenkraft des kurvenäußeren Rades 16 bei dem noch stabilen Fahrverhalten eingeleitet werden. Das in den Bremsen erzeugte Bremsmoment erfolgt wie vorstehend beschrieben in Abhängigkeit von $v_{Ref}$. Beobachtet wird bei dem hochdynamischen Gegenlenken in der Kurve zusätzlich die Querbeschleunigung LA und der Lenkradwinkelgradient SWAP. Die Querbeschleunigung zum Zeitpunkt $T_4$ ist ein Maß dafür, wie stark das Fahrzeug auf der kurvenäußeren Seite eingefedert ist, d.h. wieviel Energie im Federsystem gespeichert ist, die nach einem Kurvenwechsel beim Ausfedern Wankbeschleunigungsarbeit verrichten kann. Der Lenkradwinkelgradient zum Zeitpunkt $T_4$ gibt an, wie schnell der Kurvenwechsel und damit der Richtungswechsel der Zentrifugalkraft erfolgt. Die Überlagerung der Wankbeschleunigungen, verursacht durch die Ausfederarbeit und den Richtungswechsel der Zentrifugalkraft, kann zu den beschriebenen Fahrzeuginstabilitäten und zum Kippen des Fahrzeugs um die Längsachse führen. Liegen Querbeschleunigung und Lenkwinkelgradient im Zeitpunkt $T_4$ betragsmäßig über den Schwellwerten S5 bzw. S6 und liegen sie im Richtungssinn entgegengesetzt, ist ein Bremsen - Voreingriff erforderlich.

Der Bremsen - Voreigriff wird nach Maßgabe der folgenden Bedingungen beendet:

a.)

$$|C1 * SWAP + SWA| < 40 \quad bis \quad 200 \; Grad(Schwellenwert 9)$$

mit C1 = 0,05 bis 04 s

b.) nach einem Gierratenmaximum wird ein Richtungswechsel (Nulldurchgang) der Gierrate festgestellt

c.) die maximale Eingriffszeitdauer ist überschritten.

In a.) werden der Lenkradwinkelausschlag (proportionaler Anteil) und die Lenkradwinkelgeschwindigkeit (differenziernder Anteil) mittels eines PD-Kriteriums bewertet. Liegt das Bewertungsergebnis oberhalb eines Wertes im Bereich von z.B. 40 bis 200/s (Schwellenwert 9), liegt die hochdynamische Gegenlenkbewegung weiter hin vor, unterhalb wird der Bremsen - Voreingriff beendet.

Weiterhin wird der Bremsen - Voreingriff beendet, wenn das am kurvenäußeren Vorderrad 16 eingesteuerte Bremsmoment zu hoch war. Dies wird dann angenommen, wenn nach einem Bremsen - Voreingriff die Gierrate einen Richtungswechsel (Nulldurchgang) vollzieht.

Ferner wird die Fahrzeuggeschwindigkeit $v_{Ref}$ und die Querbeschleunigung LA beobachtet und nach Maßgabe dieser Größen die Eingriffszeitdauer des Bremsen - Voreingriff begrenzt. Die maximale Eingriffszeitdauer ist um so größer, je größer die Fahrzeuggeschwindigkeit bzw. die Querbeschleunigung zum Eingriffsbeginn ($T_4$) ist.

Wie Figur 2 zeigt, folgt der Nulldurchgang der Gierrate YR zum Zeitpunkt $T_5$ nach dem Zeitpunkt $T_4$ des Nulldurchgangs des Lenkradwinkels SWA. Beim Nulldurchgang der Gierrate YR erfolgt in Position 13 ein Seitenwechsel des kurvenäußeren Vorderrades von 16 auf 15. Das Vorderrad 15 ist durch den vorhergehenden Druckaufbau an beiden Vorderrädern 15 und 16 bereits mit Hydraulikmittel vorbefüllt. Dadurch wird die Druckdynamik erheblich erhöht. Das maximale Bremsmoment wird unmittelbar in den Radbremsen 30-33 umgesetzt.

Wurden die beschriebenen Bremsen - Voreingriffe durchgeführt, so ist in Position 14 die Fahrzeuggeschwindigkeit und damit die erforderliche Querdynamik zum Durchfahren des Wunschkurses 10 soweit reduziert, daß nicht mit einer erneuten Tendenz zu einer Fahrzeuginstabilität gerechnet werden muß. Der Verlauf der betrachteten Signale ähnelt um Position 14 dem Verlauf in den Positionen 11 bis 13, jedoch werden die Schwellwerte nicht erreicht. Somit erfolgt in Position 14 kein.Bremsen - Voreingriff.

**Patentansprüche**

1. Verfahren zur Regelung der Fahrstabilität eines Fahrzeugs, bei dem in Abhängigkeit von mehreren Eingangsgrößen Drücke für einzelne Bremsen des Fahrzeugs ermittelt werden, so daß durch radindividuelle Bremseingriffe die Fahrstabilität erhöht wird, **dadurch gekennzeichnet, daß** bei einem stabilen Fahrverhalten ermittelt wird, ob anhand eines hochdynamischen Anlenkens eine Tendenz zu einem nachfolgenden instabilen Fahrverhalten vorliegt, und daß in diesem Fall ein Bremsen - Voreingriff bereits bei einem stabilen Fahrverhalten erfolgt.

2. Verfahren nach Anspruch 1, **dadurch gekennzeichnet, daß** das hochdynamische Anlenken in Abhängigkeit von dem zeitlichen Verlauf der Lenkradwinkelgeschwindigkeit erkannt wird.

3. Verfahren nach Anspruch 1 oder 2, **dadurch gekennzeichnet, daß** der Verlauf zwischen dem Verlassen eines Ruhebandes, das ein stationäres, stabiles Fahrverhalten wiedergibt, und dem Eintritt der Lenkradwinkelgeschwindigkeit in das Ruheband bewertet wird.

4. Verfahren nach einem der Ansprüche 1 bis 3, **dadurch gekennzeichnet, daß** das hochdynamische Anlenken erkannt ist, wenn die folgenden Bedingungen erfüllt sind:

a.)

$$\left|SWAP_{MAX}\right|/(T_2 - T_1) > Schwellenwert1$$

b.)

$$\left|SWAP_{MAX}\right|/(T_3 - T_2) > Schwellenwert2$$

c.)

$$\left|SWAP_{MAX}\right| \qquad > Schwellenwert3$$

mit SWAP = Lenkradwinkelgeschwindigkeit, $SWAP_{MAX}$ = Maximum der Lenkradwinkelgeschwindigkeit, $T_1$ = Zeitpunkt des Austritts der Lenkradwinkelgeschwindigkeit aus dem Ruheband, $T_2$ = Zeitpunkt des Maximums der Lenkradwinkelgeschwindigkeit, $T_3$ = Zeitpunkt des Eintritts der Lenkradwinkelgeschwindigkeit in das Ruheband.

5. Verfahren nach einem der Ansprüche 1 bis 4, **dadurch gekennzeichnet, daß** ein Bremsen - Voreingriff erfolgt, wenn zum Zeitpunkt $T_3$ des Eintritts der Lenkradwinkelgeschwindigkeit in das Ruheband die Beträge der Gierrate und/oder der Querbeschleunigung oberhalb vorgegebener Schwellenwerte S7 bzw. S8 liegen.

6. Verfahren nach einem der Ansprüche 1 bis 5, **dadurch gekennzeichnet, daß** der Bremsen - Voreingriff am kurvenäußeren Vorderrad erfolgt.

7. Verfahren nach einem der Ansprüche 1 bis 6, **dadurch gekennzeichnet, daß** die Schwellenwerte S1 bis S8 und das mit dem Bremsen - Voreingriff aufgebrachte Bremsmoment in Abhängigkeit von der Fahrzeuggeschwindigkeit $v_{Ref}$ und/oder dem Maximum der Lenkradwinkelgeschwindigkeit erfolgt.

8. Verfahren nach einem der Ansprüche 1 bis 7, **dadurch gekennzeichnet, daß** der Bremsen - Voreingriff solange erfolgt, wie die Bedingung $|SWAP_t\text{-}SWAP_{MAX}|/(t\text{-}T_2)>Schwellenwert4$ erfüllt ist.

9. Verfahren zur Regelung der Fahrstabilität eines Fahrzeugs, bei dem in Abhängigkeit von mehreren Eingangsgrößen Drücke für einzelne Bremsen des Fahrzeugs ermittelt werden, so daß durch radindividuelle Bremseingriffe die Fahrstabilität erhöht wird, insbesondere nach einem der Ansprüche 1 bis 8, **dadurch gekennzeichnet, daß** bei einer stabilen Kurvenfahrt ermittelt wird, ob anhand der Lenkradwinkelgeschwindigkeit und der Querbeschleunigung eine Tendenz zu einem nachfolgenden instabilen Fahrverhalten vorliegt, und daß in diesem Fall ein Bremsen - Voreingriff bereits bei einem stabilen Fahrverhalten erfolgt.

10. Verfahren nach Anspruch 9, **dadurch gekennzeichnet, daß** der Bremsen - Voreingriff beim Wechsel der Lenkrichtung (Nulldurchgang des Lenkradwinkels SWA $T_4$) aktiviert wird, wenn die folgenden Bedingungen erfüllt sind:

SWAP < Schwellenwert 5 und
LA > Schwellenwert 6
oder
SWAP > Schwellenwert 5 und
LA < Schwellenwert 6
mit SWAP = Lenkradwinkelgeschwindigkeit, LA =
Querbeschleunigung.

11. Verfahren nach Anspruch 9 oder 10, **dadurch gekennzeichnet, daß** der Bremsen - Voreingriff beendet wird, wenn wenigstens eine der folgenden Bedingungen erfüllt ist:

a.) $|C1*SWAP+SWA|<Schwellemvert9$ und/oder

b.) nach einem Gierratenmaximum wird ein Richtungswechsel (Nulldurchgang) der Gierrate festgestellt und/oder
c.) die maximale Eingriffszeitdauer ist überschritten.

**12.** Verfahren nach einem der Ansprüche 9 bis 11, **dadurch gekennzeichnet, daß** der Bremsen - Voreingriff an beiden Vorderrädern erfolgt.

**13.** Verfahren nach einem der Ansprüche 9 bis 12, **dadurch gekennzeichnet, daß** das mit dem Bremsen - Voreingriff aufgebrachte Bremsmoment in Abhängigkeit von der Fahrzeuggeschwindigkeit $v_{Ref}$ und/oder der Querbeschleunigung und/oder dem Lenkradwinkelgradienten erfolgt.

**14.** Verfahren nach einem der Ansprüche 9 bis 13, **dadurch gekennzeichnet, daß** die Zeitdauer des Bremsen - Voreingriffs in Abhängigkeit von der Fahrzeuggeschwindigkeit $v_{Ref}$ und/oder der Querbeschleunigung und/oder dem Lenkradwinkelgradienten erfolgt.

**Claims**

**1.** Method for regulating the driving stability of a vehicle, in which pressures are determined for individual brakes of the vehicle as a function of a plurality of input variables, with the result that the driving stability is increased by wheel-specific braking interventions, **characterized in that** in the case of a stable driving behaviour it is determined whether, on the basis of a highly dynamic steering movement, there is a tendency for subsequent unstable driving behaviour, and in this case a braking pre-intervention is already carried out during a stable driving behaviour.

**2.** Method according to Claim 1, **characterized in that** the highly dynamic steering movement is detected as a function of the time profile of the steering wheel angle speed.

**3.** Method according to Claim 1 or 2, **characterized in that** the profile is evaluated between the exiting from a rest band, which represents a steady-state, stable driving behaviour, and the entry of the steering wheel angle speed into the rest band.

**4.** Method according to one of Claims 1 to 3, **characterized in that** highly dynamic steering movement is detected if the following conditions are met:

a.)

$$\left| SWAP_{MAX} \right| / (T_2 - T_1) > Thresholdvalue1$$

b.)

$$\left| SWAP_{MAX} \right| / (T_3 - T_2) > Thresholdvalue2$$

c.)

$$\left| SWAP_{MAX} \right| > Thresholdvalue3$$

where SWAP = steering wheel angle speed, $SWAP_{MAx}$ = Maximum of the steering wheel angle speed, $T_1$ = the time of exiting of the steering wheel angle speed from the rest band, $T_2$ = the time of the maximum value of the steering wheel angle speed, $T_3$ = the time of the entry of the steering wheel angle speed into the rest band.

**5.** Method according to one of Claims 1 to 4, **characterized in that** a braking pre-intervention takes place if at the time $T_3$ of entry of the steering wheel angle speed into the rest band the absolute values of the yaw rate and/or the lateral acceleration are above predefined threshold values S7 and 8, respectively.

6. Method according to one of Claims 1 to 5, **characterized in that** the braking pre-intervention is carried out at the front wheel on the outside of the bend.

7. Method according to one of Claims 1 to 6, **characterized in that** the threshold values S1 to S8 and the braking torque which is applied with the braking pre-intervention are implemented as a function of the vehicle velocity $v_{Ref}$ and/or the maximum value of the steering wheel angle speed.

8. Method according to one of Claims 1 to 7, **characterized in that** the braking pre-intervention takes place for as long as the condition $|SWAP_t\text{-}SWAP_{MAX}|/(t\text{-}T_2) > Tresholdvalue4$ is met.

9. Method for regulating the driving stability of a vehicle in which pressures are determined for individual brakes of the vehicle as a function of a plurality of input variables, with the result that the driving stability is increased by means of wheel-specific braking interventions, in particular according to one of Claims 1 to 8, **characterized in that** during stable cornering it is determined whether, on the basis of the steering wheel angle speed and the lateral acceleration, there is a tendency for subsequent unstable driving behaviour, and **in that in that** case a braking pre-intervention is already carried out during a stable driving behaviour.

10. Method according to Claim 9, **characterized in that** the braking pre-intervention is activated at the changeover of the steering direction (zero crossover of the steering wheel angle SWA $T_4$) when the following conditions are met:

SWAP < Threshold value 5 and
LA > Threshold value 6
or
SWAP > Threshold value 5 and
LA < Threshold value 6
where SWAP = steering wheel angle speed, LA = Lateral acceleration.

11. Method according to Claim 9 or 10, **characterized in that** the braking pre-intervention is ended if at least one of the following conditions is met:

a.)

$$|C1*SWAP + SWA| < Thresholdvalue9$$

and/or
b.) after a maximum value of the yaw rate, a change of direction (zero crossover) of the yaw rate is detected and/or
c.) the maximum intervention time period is exceeded.

12. Method according to one of Claims 9 to 11, **characterized in that** the braking pre-intervention is carried out at both front wheels.

13. Method according to one of Claims 9 to 12, **characterized in that** the braking torque which is applied with the braking pre-intervention is carried out as a function of the vehicle velocity $v_{Ref}$ and/or the lateral acceleration and/or the steering wheel angle gradient.

14. Method according to one of Claims 9 to 13, **characterized in that** the time period of the braking pre-intervention occurs as a function of the vehicle velocity $v_{Ref}$ and/or the lateral acceleration and/or the steering wheel angle gradient.

**Revendications**

1. Procédé de régulation de la stabilité de roulage d'un véhicule dans lequel les pressions sur les différents freins du véhicule sont déterminées en fonction de plusieurs grandeurs d'entrée de telle sorte que la stabilité de roulage soit augmentée par des interventions de freinage distinctes sur les différentes roues,
**caractérisé en ce que**
dans un comportement de roulage stable, on détermine à l'aide d'un braquage à forte dynamique s'il existe une tendance à un comportement instable ultérieur de roulage et
**en ce que** dans ce cas, une pré-intervention de freinage a déjà lieu lors du comportement de roulage stable.

2. Procédé selon la revendication 1, **caractérisé en ce que** le braquage à forte dynamique est détecté en fonction de l'évolution temporelle de la vitesse angulaire du volant.

3. Procédé selon les revendications 1 ou 2, **caractérisé en ce que** l'évolution est évaluée entre l'instant où une bande de repos qui représente un comportement stationnaire stable de roulage et celui de l'entrée de la vitesse angulaire du volant dans la bande de repos.

4. Procédé selon l'une des revendications 1 à 3, **caractérisé en ce que** le braquage à forte dynamique est détecté si les conditions suivantes sont satisfaites:

   a.)

$$|SWAP_{MAX}|/(T_2-T_1) > \text{valeur de seuil 1}$$

   b.)

$$|SWAP_{MAX}|/(T_3-T_2) > \text{valeur de seuil 2}$$

   c.)

$$|SWAP_{MAX}| > \text{valeur de seuil 3}$$

   dans laquelle SWAP = vitesse angulaire du volant, $SWAP_{MAX}$ = maximum de la vitesse angulaire du volant, $T_1$ = instant de la sortie de la vitesse angulaire du volant hors de la bande de repos, $T_2$ = instant du maximum de la vitesse angulaire du volant et $T_3$ = instant de l'entrée de la vitesse angulaire du volant dans la bande de repos.

5. Procédé selon l'une des revendications 1 à 4, **caractérisé en ce qu'**une pré-intervention de freinage a lieu lorsqu'à l'instant $T_3$ de l'entrée de la vitesse angulaire du volant dans la bande de repos, le niveau de la vitesse de lacet et/ou celui de l'accélération transversale sont situés au-dessus de valeurs de seuil S7 ou S8 prédéterminées.

6. Procédé selon l'une des revendications 1 à 5, **caractérisé en ce que** la pré-intervention de freinage s'effectue sur la roue avant située à l'extérieur du virage.

7. Procédé selon l'une des revendications 1 à 6, **caractérisé en ce que** les valeurs de seuils S1 à S8 et le couple de freinage appliqué par la pré-intervention de freinage s'effectuent en fonction de la vitesse du véhicule $v_{Ref}$ et/ou du maximum de la vitesse angulaire du volant.

8. Procédé selon l'une des revendications 1 à 7, **caractérisé en ce que** la pré-intervention de freinage a lieu tant que la condition $|SWAP_1-SWAP_{MAX}|/(t-T_2) > \text{valeur de seuil 4}$ est satisfaite.

9. Procédé de régulation de la stabilité de roulage d'un véhicule, dans lequel les pressions sur les différents freins du véhicule sont déterminées en fonction de plusieurs grandeurs d'entrée de telle sorte que la stabilité de roulage soit augmentée, en particulier selon l'une des revendications 1 à 8, **caractérisé en ce que** lors d'un virage parcouru de manière stable, on détermine à l'aide de la vitesse angulaire du volant et de l'accélération transversale s'il existe une tendance vers un comportement de roulage instable ultérieur, et **en ce que** dans ce cas, une pré-intervention de freinage a déjà lieu lors d'un comportement de roulage stable.

10. Procédé selon la revendication 9, **caractérisé en ce que** la pré-intervention de freinage est activée lors d'un changement de sens de braquage (passage de l'angle de volant SWA $T_4$ par zéro) si les conditions suivantes sont satisfaites:

SWAP < valeur de seuil 5 et
LA > valeur de seuil 6
ou
SWAP > valeur de seuil 5 et
LA < valeur de seuil 6,
avec SWAP = vitesse angulaire du volant et LA = accélération transversale.

**11.** Procédé selon les revendications 9 ou 10, **caractérisé en ce que** la pré-intervention de freinage est arrêtée si au moins l'une des conditions suivantes est satisfaite:

a.)

$$|C1*SWAP+SWA| < \text{valeur de seuil 9}$$

et/ou
b.) un changement de direction de la vitesse de lacet (passage par zéro) est constaté après un maximum de vitesse de lacet, et/ou
c.) la durée maximale d'intervention est dépassée.

**12.** Procédé selon l'une des revendications 9 à 11, **caractérisé en ce que** la pré-intervention de freinage a lieu sur les deux roues avant.

**13.** Procédé selon l'une des revendications 9 à 12, **caractérisé en ce que** le couple de freinage appliqué par la pré-intervention de freinage est fonction de la vitesse du véhicule $v_{Ref}$, de l'accélération transversale et/ou du gradient d'angle de volant.

**14.** Procédé selon l'une des revendications 9 à 13, **caractérisé en ce que** la durée de la pré-intervention de freinage dépend de la vitesse du véhicule $v_{Ref}$, du l'accélération transversale et/ou du gradient d'angle de volant.

Fig. 1

Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19632943 A1
- DE 4201146 A1